# EUROPEAN PATENT SPECIFICATION

(11) **EP 3 601 625 B1**
(45) Date of publication and mention of the grant of the patent: **19.05.2021**
(21) Application number: 18718702.6
(22) Date of filing: 19.03.2018
(51) Int. Cl.: C22B 1/00, C22B 5/10, C22B 7/00, C22C 35/00

(54) **PROCESS FOR PREPARING IRON- AND CHROME-CONTAINING PARTICLES**
VERFAHREN ZUR HERSTELLUNG VON EISEN- UND CHROMHALTIGEN PARTIKELN
PROCÉDÉ POUR PRÉPARER DES PARTICULES CONTENANT DU FER ET DU CHROME

(30) Priority: 21.03.2017 EP 17162063
(43) Date of publication of application: 05.02.2020
(73) Proprietor: BROTHER GROUP (HONG KONG) LIMITED, HONG KONG (CN)
(72) Inventor: BOLL, Matthias, 51061 Köln (DE); ZAMPIERI, Ulrike, 1724 Roodepoort (ZA); NELL, Johannes, 2194 Randburg (ZA)
(74) Representative: Dr. Gassner & Partner mbB
(86) International application number: PCT/EP2018/056889
(87) International publication number: WO 2018/172284

(56) References cited:
- WO-A1-2008/142704
- WO-A1-2013/011521
- GB-A- 1 459 873
- US-A- 4 500 350
- US-A1- 2004 086 438
- DEQING ET AL: "Sintering behaviours of chromite fines and the consolidation mechanism", INTERNATIONAL JOURNAL OF MINERAL PROCESSING, ELSEVIER SCIENCE PUBLISHERS, AMSTERDAM, NL, vol. 86, no. 1-4, 17 November 2007 (2007-11-17), pages 58-67, XP022501238, ISSN: 0301-7516
- DWARAPUDI, S. ET AL: "Development of Cold Bonded Chromite Pellets for Ferrochrome Production in Submerged Arc Furnace", ISIJ INTERNATIONAL, vol. 53, no. 1, 2013, pages 9-17, XP002773408,
- AGARWAL, S. ET AL: "Development of Chromite Sinterfrom Ultra-Fine Chromite Ore by Direct Sintering", ISIJ INTERNATIONAL, vol. 54, no. 3, 2014, pages 559-566, XP002773409,
- VARMA, O.P., AND JAIPURIAR, A.M.: "CHROME-ORE: ITS STRATEGIC IMPORTANCE, DOMESTIC RESOURCES & GAPS, LONG-TERM PROJECTIONS AND FUTURE OUTLOOK", , 1976, pages 271-272, XP002773410, Retrieved from the Internet: URL:http://www.insa.nic.in/writereaddata/U pLoadedFiles/PINSA/Vol42A_1976_4_Art02.pdf [retrieved on 2017-05-24]
- WANG ET AL: "A new method for the treatment of chromite ore processing residues", JOURNAL OF HAZARDOUS MATERIALS, ELSEVIER, AMSTERDAM, NL, vol. 149, no. 2, 12 October 2007 (2007-10-12), pages 440-444, XP022281720, ISSN: 0304-3894, DOI: 10.1016/J.JHAZMAT.2007.04.009

## Description

The invention relates to a process for preparing iron- and chrome-containing particles.

A widely used iron- and chrome-containing alloy is the so-called Ferrochrome. Ferrochrome is used in the stainless-steel industry to increase the resistivity of steel against water and air to prevent the formation of rust. The iron and chrome source for the Ferrochrome production is usually chromite, a chrome ore, which is found in some parts of the world, like in South Africa.

The production of Ferrochrome is carried out in huge electrically heated arc furnaces at high temperatures, using a carbon based reductant which can be part of the electrode or which is mixed in the chrome ore, or both. The consumption of electricity is significant and determines the cost effectiveness of the process. The process results in a liquid, molten alloy which is casted in casts, and a layer of partially molten residue floating on top of the liquid metal, the slag.

The usage of fine chrome ore material, so-called "fines" or "flour", is economically of interest, but practically difficult. In the arc furnaces a strong stream of hot gas is formed which results in an upstream. The particles of the fines are too small to be dropped into the furnace to reach the hottest zones for reduction. Most of this material will be blown out of the furnace with the gas stream. To get the fines in a suitable shape, pellets were formed out of the fines as disclosed in ZA 2004-03429 A. In Minerals Engineering (2012), 34, 55-62, a detailed description of the used binders and their properties and effects on the pellet strength and other properties are given.

The particles produced according to the process of ZA 2004-03429 A and in Minerals Engineering (2012), 34, 55-62, are made of chromite ore, a carbonaceous reductant and a so-called unconverted or non-activated binding agent. The binding agent is a mainly silica based clay, like Bentonite. Bentonite comprises around 18 weight-% of silicium.

There are some disadvantages of this process and the particles produced according to this process: the binding agent Bentonite contains neither iron nor chrome and thus, cannot contribute to the formation of Ferrochrome afterwards. Instead, the silica contained in Bentonite increases the amount of useless and costly slag. Slag is not only an undesired by-product in the process for the production of Ferrochrome but furthermore its formation requires additional electrical energy (e.g. for heating and for the reduced throughput of the furnace).

DEQING et al. disclose a process for sintering of chromite fines in "Sintering behaviours of chromite fines and the consolidation mechanism", INTERNATIONAL JOURNAL OF MINERAL PROCESSING, ELSEVIER SCIENCE PUBLISHERS, AMSTERDAM, NL, vol. 86., no. 1-4, 17 November 2007 (2007-11-17), in which a study on sintering of imported chromite fines using sinter pot (diameter 150 mm, depth 600 mm) was conducted. It is revealed that the consolidation of chromite sinter mainly depended on about 20% liquid phase of olivine along with solid-state reactions and recrystallization of Cr₂O₃ contributing to sinter strength to some extent, which is quite different from the sintering of iron ores with about 35% - 40% liquid phase.

DWARAPUDI, S. et al. disclose a method for the production of cold bonded pellets from chromite fines which chromite overburden (i.e. chromite ore process residue), binder and coke breeze are admixed in "Development of Cold Bonded Chromite Pellets for Ferrochrome Production in Submerged Arc Furnace", ISIJ INTERNATIONAL, vol. 53, no. 1, 2013. Different binders were studied through laboratory pelletizing experiments for their suitability for cold bonding the pellets. As result, a composite binder comprising dextrin and bentonite was found to be suitable and pellets made from the same were tested for their low and high temperature behaviour.

WO 2008/142704 A1 discloses a process for the production of chromium nuggets from chromite ore/concentrate, comprising: - oxidizing chromite ore/chromium concentrate (1) comprising a Cr : Fe-ratio ranging from 1.0 to 3.3 in a furnace (2) at a temperature of 900 °C, - mixing (7) the oxidized ore (4) with reductant coal (5) and fluxes (lime, silica) (6), - pelletizing (8) the mixture, - reducing the pellets in a rotary furnace (9) at a temperature between 1400 and 1600 °C, - separating the thus produced chromium nuggets (12) from slag (13) in a separation unit (11), in which a low temperature reduction of pre-oxidized chromites ores/concentrated is achieved, saving energy.

US 4 500 350 A discloses the disintegration of chromites, wherein the chromium-containing material is disintegrated with an alkaline compound in the presence of oxygen and a diluent at a temperature above about 800 °C and thereafter leached. Residues from previous leaching cycles can be present during disintegration as solid diluents but their contents of SiO₂ and/or Al₂O₃ are not taken into account in calculating the SiO₂:AL₂O₃ ratios. The process gives excellent results even with starting materials relatively high in SiO₂ which are difficult to disintegrate to materials of desirable properties by other methods.

Thus, it was the object of the present invention to provide a process for preparing iron- and chrome-containing particles that avoids the disadvantages of the prior art and that leads to particles that can preferably be used in a process for the preparation of Ferrochrome that shows a reduced slag formation. Further, the particles should preferably be usable in a process for the preparation of Ferrochrome that is more energy-efficient. Further, it was an object of the present invention to provide iron- and chrome-containing particles that exhibit a sufficient stability to be stored and/or transported, e.g. transported to the process for the production of Ferrochrome.

The invention therefore provides a process for preparing iron- and chrome-containing particles comprising the steps
a) producing ore particles by mixing
   - in a first step chromite ore material, Chrome Ore Process Residue (COPR) and a reductant component, and
   - in second step the mixture obtained after the first step with water,
b) drying the ore particles obtained after step a), and
   optionally
c) reducing the ore particles obtained after step b) to produce metallised particles.

### Step a)

### Chromite ore material

Preferably, the chromite ore material used in step a) contains:
- chrome(III)oxid (Cr₂O₃): 26 to 54 weight-%, particularly preferably 40 to 45 weight-%,
- aluminium oxide (Al₂O₃): 10 to 30 weight-%, particularly preferably 13 to 18 weight-%,
- iron(II)oxide (FeO): 12 to 36 weight-%, particularly preferably 20 to 28 weight-%,
- magnesium oxide (MgO): 9 to 22 weight-%, particularly preferably 10 to 15 weigh t-%,
- calcium oxide (CaO): < 5 weight-%, particularly preferably < 1 weight-%, and
- silicium oxide (SiO₂): 1 to 18 weight-%, particularly preferably 2 to 5 weight-%,
whereas the weight-% refer to the weight of the chromite ore material.

The worldwide largest chromite ores deposits are located in South Africa, Zimbabwe, Turkey and the Philippines and in some other countries. The chromite ore is divided in two categories: The metallurgical grade with ≥ 45 weight-% of Cr₂O₃ and the chemical grade with < 45% weight-% and ≥ 40 weight-% of Cr₂O₃. The largest known deposit of chromite ore is found in Zimbabwe with over 300 mio. tons.

### Chrome Ore Process Residue

Preferably, Chrome Ore Process Residue (COPR) contains metal oxides such as chromium(III)oxide (Cr₂O₃), aluminium oxide (Al₂O₃), iron(III)oxide (Fe₂O₃), iron(II)oxide (FeO), magnesium oxide (MgO), calcium oxide (CaO), silicon oxide (SiO₂), vanadium oxide (V₂O₅), sodium oxide (Na₂O) and sodium monochromate (Na₂CrO₄).

The Cr(VI) is preferably present as sodium monochromate (Na₂CrO₄) in the COPR. The CaO content of the COPR is preferably less than 15% by weight, particularly preferably less than 10% by weight, most preferably less than 5% by weight.

COPR contains:
- chrome(III)oxide (Cr₂O₃): 7 to 13 weight-%, preferably 7,5 to 12,5 weight-%,
- aluminium oxide (Al₂O₃): 10 to 30 weight-%, preferably 18 to 24 weight-%,
- iron(II)oxide (FeO): 36 to 44 weight-%, preferably 37 to 42 weight-%,
- iron(III)oxide (Fe₂O₃): > 0,5% weight-%, preferably > 2 weight-%,
- magnesium oxide (MgO): 9 to 18 weight-%, preferably 10 to 17 weight-%,
- calcium oxide (CaO): < 10 weight-%, preferably < 5 weight-%,
- silicium oxide (SiO₂): 0 to 3 weight-%, preferably 1 to 3 weight-%,
- vanadium oxide (V₂O₅): < 1 weight-%, preferably < 0.5 weight-%,
- sodium oxide (Na₂O): 0 to 5 weight-%, preferably 2 to 5 weight-%, and
- sodium monochromate (Na₂CrO₄): 0 to 4,7 weight-%, preferably < 0,0003 weight-%,
whereas the weight-% refer to the weight of the COPR.

Preferably, the Cr(VI) content of the COPR is 0,01 to 1 weight-%.

Preferably, the Cr content in the COPR is 2 to 25 weight-%, particularly preferably 5 to 9 weight-%.

Preferably, the Fe content in the COPR is 28 to 35 weight-%, particularly preferably 29 to 34 weight-%.

Preferably, the Si content in the COPR is 0 to 1,5 weight-%, particularly preferably 0,4 to 1,0 weight-%.

The COPR used in step a) can be obtained as a by-product from the sodium monochromate production process. Therein, chrome ore is mixed with soda ash and heated to a temperature of about 1200 °C under oxidizing condition. The reaction mixture is leached with water, and the dried solid residue is the so-called Chrome Ore Process Residue (COPR).

Preferably, the COPR is obtained in the process for producing sodium monochromate from chromite via an oxidative alkaline digestion with sodium carbonate (no lime process, CaO content of < 5% by weight).

Alternatively, the Cr(VI) content of the COPR is preferably < 0,0001 weight-%.

COPR with a Cr(VI) content of < 0,0001 weight-% is preferably obtained via a reduction process of COPR with a Cr(VI) content of 0,01 to 1 weight-% in that the reduction of Cr(VI) to Cr(III) takes preferably place via polyethylene glycol (PEG) or glycerol as disclosed in WO 2014006196 A1 or, alternatively, in an atmosphere containing less than 0,1% by volume of an oxidizing gas as disclosed in WO 2016074878 A1.

All the above mentioned weight-% refer to the weight of the COPR.

### Reductant component

The reductant component used in step a) is preferably selected from the group consisting of anthracite, char and bituminous coal, particularly preferably anthracite.

Anthracite contains preferably less than 1 weight-% of organic compounds. Such organic compounds preferably evaporate at temperatures above 70 °C up to 1400 °C in an inert atmosphere. These organic compounds are preferably saturated and unsaturated hydrocarbons.

The quantity of these organic compounds is determined by heating the reductant component in an inert atmosphere up to the target temperature and taking readings on the mass loss. This detected mass loss is subtracted from the mass loss found on heating the particles in a second step, in order to calculate the degree of reduction.

Preferably, 0,5 to 1 equivalents of the reductant component with reference to the to be reduced Fe- and Cr-ions contained in the chromite ore material and the COPR are used in step a), particularly preferably 0,7 to 0,9 equivalents.

Thus, the Fe- and Cr-ions contained in the chromite ore material and the COPR used in step a) are at least partially reduced to iron and chrome metal in step a).

### The process

There are different ways known to the skilled person for mixing the chromite ore material, COPR and a reductant component in the first step of step a).

Preferably, the mixing is conducted by using a dry mill.

The components used in the first step of step a) are preferably milled. The milling can take place prior to the mixing in the first step of step a), during the mixing in the first step of step a) or after the mixing in the first step of step a).

Preferably, the chromite ore material, COPR and a reductant component are milled during mixing in the first step of step a).

Preferably, the mixture obtained after the mixing of the chromite ore material, COPR and a reductant component in the first step of step a) comprises
- 50 to 95 weight-%, particularly preferably 75 to 90 weight-% of chromite ore material,
- 1 to 15 weight-%, particularly preferably 2 to 5 weight-% of COPR, and
- 3 to 25 weight-%, particularly preferably 6 to 20 weight-% of the reductant component,
whereas the weight-% refer to the weight of the mixture obtained after the mixing of chromite ore material, COPR and a reductant component in the first step of step a).

Preferably, the mixture obtained after the mixing of the chromite ore material, COPR and a reductant component in the first step of step a) provides a D90 of 50 to 100 µm, particularly preferably of 65 to 85 µm. According to the invention, a D90 of 50 µm means that 90% by volume of the particles of the mixture have a particle size of 50 µm.

The mixture obtained after the mixing of chromite ore material, COPR and a reductant component in a first step is mixed with water in a second step.

The weight ratio of water to the sum of the components chromite ore material, COPR and a reductant component is preferably between 1:6 and 1: >100, particularly preferably between 1:8 and 1: >100, most preferably 1: >100.

The second step of step a) may take place in either a pan or drum pelletizing unit. Thereby, composite carbon containing (so-called "green") ore particles are obtained.

Preferably, the ore particles obtained after step a) have a diameter of 8 to 20 mm, particularly preferably of 10 to 15 mm.

Preferably, the silicium content of the ore particles obtained after step a) is below 2,5 weight-%, particularly preferably below 2 weight-%, whereas the weight-% refer to the weight of the ore particles obtained after step a).

Preferably, the ore particles obtained after step a) do not crack when dropped from a height of up to 0,2 m, particularly preferably of up to 0,4 m, most preferably of up to 0,5 m, on a steel plate.

### Step b)

The drying of the ore particles obtained after step a) may be conducted in different ways known to the skilled person.

The ore particles can be pre-dried under ambient conditions, preferably at a temperature of 18 to 30 °C, for 4 to 40 hours, preferably for 12 to 30 hours.

Preferably, the drying is effected by heating the ore particles under atmospheric conditions. Particularly preferably, the drying takes place at a temperature above 70 °C, most preferably above 100 °C. The time for the drying is preferably 2 to 50 hours, particularly preferably 6 to 30 hours.

The drying can be performed in an oven.

Optionally, the ore particles can be sintered in step b).

The ore particles obtained after step b) provide at least a sufficient mechanical stability to be stored and transported.

Preferably, the ore particles obtained after step b) do not crack when dropped from a height of up to 0,2 m, particularly preferably of up to 0,4 m, most preferably of up to 0,5 m, on a steel plate.

### Step c)

The ore particles obtained after step b) can optionally be further reduced in a reduction unit.

The reduction unit is preferably a rotary kiln, a muffle furnace or a tube furnace.

The nature and configuration of the unit are such as to maintain sufficient reducing conditions in the immediate environment of the particle bed so as to achieve high degrees of both iron and chromium metallisation and commensurately limited degrees of carbon burn-off.

In the reduction unit, the ore particles obtained after step b) are exposed to temperatures of 1250 °C to 1600 °C, for periods of 1 to 8 hours, preferably of 1300 °C to 1500 °C for periods of 2 to 5 hours, in an inert atmosphere.

Preferably, the inert atmosphere contains less than 0,1 vol-% of oxygen. Particularly preferably, the inert atmosphere is argon.

After heating, the ore particles can be cooled down, preferably to a temperature of 18 to 25 °C.

Energy supply to the reduction unit operation can be achieved via controlled, oxygen assisted combustion of a carbonaceous fuel source, which may be a bituminous coal or fuel oil, or combination thereof. Control of the relative supply of oxygen enrichment in relation to the fuel type and, in turn, the control of these components relative to the hot particle feed rate are a key component in achieving optimum metallisation that is only achieved under localized, but highly reducing conditions while sustaining good throughput rates that implies high thermal draught, sustained by optimum combustion conditions pertaining to the generation and effusion of chemical based energy from the combustion operation. Alternatively, the furnace can be heated indirectly using electrical power or gas with an inert atmosphere as described above inside the reduction unit.

The metallised particles obtained after step c) are discharged, either via direct hot transfer to the smelting furnace or via controlled cooling of the metallised product, to yield cool, metallised particles.

The reduction facility is preferably operated in a manner so as to ensure that the preheated particles are maintained at a temperature of preferably 1350 to 1450 °C for a period of between 2 and 5 hours, through the use of an oxygen enhanced coal combustion device. Oxygen support of the combustion device is considered a vital part in ensuring adequate flame geometry and energy release, while enabling the maintenance of a suitably reducing environment in the particle bed to achieve the requisite degree of metallisation.

The term "metallised particles" means that the degree of metallisation in the metallised particles obtained after step c) is above 65%, preferably above 75%, particularly preferably above 85% of the weight of the Fe- and Cr-ions contained in the chromite ore material and the COPR as used in step a).

The degree of metallisation can be determined via thermogravimetric analysis that is known to the skilled person. The loss of weight at those temperatures is directly correlated with the loss of bound oxygen consumed by the reductant component, and therewith the degree of metallisation to Fe and Cr, and the loss of the reductant component itself. After the subtraction of organic compounds in the reductant component, which is determined in a separate measurement with pure reductant component, the degree of metallisation can be calculated with ease.

Preferably, the metallised particles obtained after step c) contain chrome as chrome(III)oxide (Cr₂O₃) and as chrome metal, iron as iron(II)oxide (FeO) and iron(III)oxide (Fe₂O₃) and as iron metal, and silicium as silicium oxide (SiO₂).

The ratio of iron(II, III) to iron metal in the metallised particles obtained after step c) is preferably < 1:2, particularly preferably < 1:10.

The ratio of chrome(III) to chrome metal in the metallised particles obtained after step c) is preferably < 1:2, particularly preferably < 1:10.

The ratio of iron(II, III) and chrome(III) to iron and chrome metal in the iron- and chrome-containing particles is preferably < 1:2, particularly preferably < 1:10.

In the metallised particles obtained after step c) the Cr(VI) content is preferably < 0,0001 weight-%. The metallised particles obtained after step c) are particularly preferably free of Cr(VI).

The metallised particles obtained after step c) provide increased mechanical stability compared to those obtained after step b).

The metallised particles can be further stored or transported, e.g. to an electric submerged arc furnace for the preparation of Ferrochrome.

Preferably, the metallised particles obtained after step c) do not crack when dropped from a height of up 0,8 m, particularly preferably of up to 1,2 m, most preferably of up to 1,5 m, on a steel plate.

By the use of the metallised particles obtained after step c) the electrical energy consumption for the complete reduction to iron metal and chrome metal in the arc furnace is reduced.

### Iron- and chrome-containing particles

The particles produced by the method according to the invention contain:
- chroe: 22 to 26 weight-%, preferably 23 to 25 weight-%,
- iron: 13 to 19% weight-%, preferably 14 to 18 weight-%, and
- silicium: 0,5 to 2 weight-%, preferably 0,5 to 1 weight-%,
whereas the weight-% refer to the weight of the iron- and chrome-containing particles.

Preferably, the iron- and chrome-containing particles contain chrome as chrome(III)oxide (Cr₂O₃) and as chrome metal, iron as iron(II)oxide (FeO) and iron(III)oxide (Fe₂O₃) and as iron metal, and silicium as silicium oxide (SiO₂).

The ratio of iron(II, III) to iron metal in the iron- and chrome-containing particles is preferably < 1:2, particularly preferably < 1:10.

The ratio of chrome(III) to chrome metal in the iron- and chrome-containing particles is preferably < 1:2, particularly preferably < 1:10.

The ratio of iron(II, III) and chrome(III) to iron and chrome metal in the iron- and chrome-containing particles is preferably < 1:2, particularly preferably < 1:10.

In the iron- and chrome-containing particles the Cr(VI) content is preferably < 0,0001 weight-%. The iron- and chrome-containing particles are particularly preferably free of Cr(VI).

Preferably, the iron- and chrome-containing particles have a diameter of 6 to 13 mm.

Generally, more than 80%, preferably more than 90%, more preferably more than 95% and most preferably more than 98% of the iron- and chrome-containing particles do not crack when dropped from a height of 0.5 m on a steel plate. Typically, more than 80%, preferably more than 90%, more preferably more than 95% and most preferably more than 98% of the iron- and chrome-containing particles do not crack when dropped from a height of 1.2 m on a steel plate. Usually, more than 80%, preferably more than 90%, more preferably more than 95% and most preferably more than 98% of the iron- and chrome-containing particles do not crack when dropped from a height of 1.5 m on a steel plate.

Preferably, the iron- and chrome-containing particles do not crack when dropped from a height of up to 0,5 m, particularly preferably of up to 1,2 m, most preferably of up to 1,5 m, on a steel plate.

Preferably, the iron- and chrome-containing particles according to the invention are obtained by the process for preparing iron- and chrome-containing particles according to the invention.

The invention will be described in more detail in the following no-limiting example.

### Example 1:

A mixture of 82,2 weight-% of chromite ore material, 15,3 weight-% of anthracite and 2,5 weight-% of COPR (Cr(VI) content < 0,0001 weight-%) was milled down to a D90 of 75 µm (90 per cent by volume have a particle size of below 75 µm), whereas the weight-% refer to the sum of the components chromite ore material, COPR and reductant component.

The received material was filled in a rotating drum and sprayed with water (weight ratio received material: water = 10 : 0,98) while the drum was turning. The particles were pre-dried at 25 °C in air for 24 hours. After this, the particles were dried in an oven for 24 hours at 105 °C.

These ore particles were then reduced. The reduction was conducted in a muffle furnace at 1400 °C (heating rate of 10 °C/min) for a period of four hours under inert atmosphere using argon, before cooling down a temperature of 23 to 25 °C.

### Comparative Example according to ZA 2004-03429 A:

A mixture of 82,2 weight-% of chromite ore material, 15,3 weight-% of anthracite and 2,5 weight-% of Bentonite was milled down to a D90 of 75 µm (90 per cent by volume have a particle size of below 75 µm), whereas the weight-% refer to the sum of the components chromite ore material, Bentonite and reductant component.

The received material was filled in a rotating drum and sprayed with water (weight ratio received material: water = 10 : 0,98) while the drum was turning. The particles were pre-dried at 25 °C in air for 24 hours. After this, the particles were dried in an oven for 24 hours at 105 °C.

These ore particles were then reduced. The reduction was conducted in a muffle furnace at 1400 °C (heating rate of 10 °C/min) for a period of four hours under inert atmosphere using argon, before cooling down to a temperature of 23 to 25 °C.

### Tests of mechanical stability

Drop tests were conducted by dropping ten selected particles obtained according to example 1 or the comparative example, respectively, each three times at each height interval (0,5 and 1,5 meters) and counting the number of drops from that height before the particle cracks. Should all particles not crack after three drops at the initial height (i.e. 0,5 m), the next height was evaluated. The particles were dropped on a steel plate. Results are summarized in table 1.

**Table 1**

| **Sample:** | **Maximum height [m]** |
|---|---|
| Ore particles obtained after step a) | |
| • example 1 | 0,5 |
| • comparative example | 0,5 |
| pre-dried ore particles obtained after pre-drying in step b) | |
| • example 1 | 0,5 |
| • comparative example | 0,5 |
| dried ore particles obtained after drying in step b) | |
| • example 1 | 0,5 |
| • comparative example | 0,5 |
| metallised particles obtained after the reduction in step c) | |
| • example 1 | 1,5 |
| • comparative examples | 1,5 |

The results show that particles obtained after different process steps according to the process of the invention provide at least the same mechanical strength as those of the comparative example according to ZA 2004-03429 A. Further, the particles according to the invention contain a higher amount of Cr and Fe and a lower amount of Si and thus, can advantageously be used in a process for the preparation of Ferrochrome.

## Claims

1. A process for preparing iron- and chrome-containing particles comprising the steps
a) producing ore particles by mixing
- in a first step chromite ore material, Chrome Ore Process Residue (COPR) and a reductant component, and
- in second step the mixture obtained after the first step with water,
b) drying the ore particles obtained after step a), and
optionally
c) reducing the ore particles obtained after step b) to produce metallised particles,
**characterized in that** the COPR contains
• chrome(III)oxide (Cr₂O₃): 7 to 13 weight-%, preferably 7,5 to 12,5 weight-%,
• aluminium oxide (Al₂O₃): 10 to 30 weight-%, preferably 18 to 24 weight-%,
• iron(II)oxide (FeO): 36 to 44 weight-%, preferably 37 to 42 weight-%,
• iron(III)oxide: (Fe₂O₃) >0,5% weight-%, preferably >2 weight-%,
• magnesium oxide (MgO): 9 to 18 weight-%, preferably 10 to 17 weight-%,
• calcium oxide (CaO): < 10 weight-%, preferably < 5 weight-%,
• silicium oxide (SiO₂): 0 to 3 weight-%, preferably 1 to 3 weight-%,
• vanadium oxide (V₂O₅): < 1 weight-%, preferably < 0.5 weight-%,
• sodium oxide (Na₂O): 0 to 5 weight-%, preferably 2 to 5 weight-%, and
• sodium monochromate (Na₂CrO₄): 0 to 4,7 weight-%, preferably < 0,0003 weight-%,
whereas the weight-% refer to the weight of the COPR.

2. A process according to claim 1, **characterized in that** the chromite ore material contains
• chrome(III)oxid (Cr₂O₃): 26 to 54 weight-%, particularly preferably 40 to 45 weigh t-%,
• aluminium oxide (Al₂O₃): 10 to 30 weight-%, particularly preferably 13 to 18 weight-%,
• iron(II)oxide (FeO): 12 to 36 weight-%, particularly preferably 20 to 28 weight-%,
• magnesium oxide (MgO): 9 to 22 weight-%, particularly preferably 10 to 15 weight-%,
• calcium oxide (CaO): < 5 weight-%, particularly preferably < 1 weight-%, and
• silicium oxide (SiO₂): 1 to 18 weight-%, particularly preferably 2 to 5 weight-%,
whereas the weight-% refer to the weight of the chromite ore material.

3. A process according to any one of claims 1 to 2, **characterized in that** the reductant component is selected from the group consisting of anthracite, char and bituminous coal, preferably anthracite.

4. A process according to any one of claims 1 to 3, **characterized in that** the Cr content in the COPR is 2 to 25 weight-%, preferably 5 to 9 weight-%, and the Fe content in the COPR is 28 to 35 weight-%, preferably 29 to 34 weight-%, whereas the weight-% refer to the weight of the COPR.

5. A process according to any one of claims 1 to 4, **characterized in that** the Cr(VI) content of the COPR is < 0,0001 weight-%.

6. A process according to any one of claims 1 to 5, **characterized in that** the mixture obtained after the mixing of the chromite ore material, COPR and a reductant component in the first step of step a) comprises
• 50 to 95 weight-%, preferably 75 to 90 weight-% of chromite ore material,
• 1 to 15 weight-%, preferably 2 to 5 weight-% of COPR, and
• 3 to 25 weight-%, preferably 6 to 20 weight-% of the reductant component,
whereas the weight-% refer to the weight of the mixture obtained after the mixing of the chromite ore material, COPR and a reductant component in the first step of step a).

7. A process according to any one of claims 1 to 6, **characterized in that** the reducing in step c) takes place at temperatures of 1250 °C to 1600 °C, for periods of 1 to 8 hours, preferably of 1300 °C to 1500 °C for periods of 2 to 5 hours, in an inert or reducing atmosphere.

8. A process according to any one of claims 1 to 7, **characterized in that** the degree of metallisation of the metallised particles obtained after step c) is above 65%, preferably above 75%, particularly preferably above 85% of the weight of the Fe- and Cr-ions contained in the chromite ore material and the COPR as used in step a).

## Patentansprüche

1. Verfahren zur Herstellung von Eisen und Chrom enthaltenden Teilchen, umfassend die Schritte
a) Herstellen von Erzpartikeln durch Mischen von
- in einem ersten Schritt Chromit-Erz-Material, Chromerzverfahrensrückstand (Chrome Ore Process Residue (COPR)) und einer ReduktionsmittelKomponente, und
- im zweiten Schritt Mischen der nach dem ersten Schritt erhaltenen Mischung mit Wasser,
b) Trocknen der nach Schritt a) erhaltenen Erzpartikel, und
optional
c) Reduzieren der nach Schritt b) erhaltenen Erzpartikel, um metallisierte Partikel herzustellen,
**dadurch gekennzeichnet, dass** der COPR enthält
• Chrom(III)oxid (Cr₂O₃): 7 bis 13 Gew. -%, vorzugsweise 7,5 bis 12,5 Gew.-%,
• Aluminiumoxid (Al₂O₃): 10 bis 30 Gew.-%, vorzugsweise 18 bis 24 Gew.-%,
• Eisen(II)oxid (FeO): 36 bis 44 Gew.-%, vorzugsweise 37 bis 42 Gew.-%,
• Eisen(III)oxid: (Fe₂O₃) >0,5 Gew.-%, vorzugsweise >2 Gew.-%,
• Magnesiumoxid (MgO): 9 bis 18 Gew.-%, vorzugsweise 10 bis 17 Gew.-%,
• Calciumoxid (CaO): < 10 Gew.-%, vorzugsweise < 5 Gew.-%,
• Siliziumoxid (SiO₂): 0 bis 3 Gew.-%, vorzugsweise 1 bis 3 Gew.-%,
• Vanadiumoxid (V₂O₅): < 1 Gew. -%, vorzugsweise < 0,5 Gew.-%,
• Natriumoxid (Na₂O): 0 bis 5 Gew.-%, vorzugsweise 2 bis 5 Gew.-%, und
• Natriummonochromat (Na₂CrO₄): 0 bis 4,7 Gew.-%, vorzugsweise < 0,0003 Gew.-%,
wobei sich die Gew.-% auf das Gewicht des COPR beziehen.

2. Verfahren nach Anspruch 1, **dadurch gekennzeichnet, dass** das Chromit-Erzmaterial enthält
• Chrom(III)oxid (Cr₂O₃): 26 bis 54 Gew.-%, besonders bevorzugt 40 bis 45 Gew.-%,
• Aluminiumoxid (Al₂O₃): 10 bis 30 Gew.-%, besonders bevorzugt 13 bis 18 Gew.-%,
• Eisen(II)oxid (FeO): 12 bis 36 Gew.-%, besonders bevorzugt 20 bis 28 Gew.-%,
• Magnesiumoxid (MgO): 9 bis 22 Gew.-%, besonders bevorzugt 10 bis 15 Gew.-%,
• Calciumoxid (CaO): < 5 Gew.-%, besonders bevorzugt < 1 Gew.-%, und
• Siliziumoxid (SiO₂): 1 bis 18 Gew.-%, besonders bevorzugt 2 bis 5 Gew.-%,
wobei sich die Gew.-% auf das Gewicht des Chromit-Erzmaterials beziehen.

3. Verfahren nach einem der Ansprüche 1 bis 2, **dadurch gekennzeichnet, dass** die Reduktionsmittelkomponente ausgewählt wird aus der Gruppe umfassend Anthrazit, Holzkohle und Steinkohle, vorzugsweise Anthrazit.

4. Verfahren nach einem der Ansprüche 1 bis 3, **dadurch gekennzeichnet, dass** der Cr-Gehalt im COPR 2 bis 25 Gew.-%, vorzugsweise 5 bis 9 Gew.-%, und der Fe-Gehalt im COPR 28 bis 35 Gew.-%, vorzugsweise 29 bis 34 Gew.-%, beträgt, wobei sich die Gew.-% auf das Gewicht des COPR beziehen.

5. Verfahren nach einem der Ansprüche 1 bis 4, **dadurch gekennzeichnet, dass** der Cr(VI)-Gehalt des COPR < 0,0001 Gew.-% beträgt.

6. Verfahren nach einem der Ansprüche 1 bis 5, **dadurch gekennzeichnet, dass** die nach dem Mischen des Chromit-Erzmaterials, COPR und einer Reduktionsmittelkomponente im ersten Schritt von Schritt a) erhaltene Mischung umfasst
• 50 bis 95 Gew.-%, vorzugsweise 75 bis 90 Gew.-% Chromit-Erzmaterial,
• 1 bis 15 Gew.-%, vorzugsweise 2 bis 5 Gew.-% COPR, und
• 3 bis 25 Gew.-%, vorzugsweise 6 bis 20 Gew.-% der Reduktionsmittelkomponente,
wobei sich die Gew.-% auf das Gewicht der Mischung beziehen, die nach dem Mischen des Chromit-Erzmaterials, des COPR und einer Reduktionsmittelkomponente im ersten Schritt von Schritt a) erhalten wird.

7. Verfahren nach einem der Ansprüche 1 bis 6, **dadurch gekennzeichnet, dass** die Reduktion in Schritt c) bei Temperaturen von 1250 °C bis 1600 °C, über Zeiträume von 1 bis 8 Stunden, vorzugsweise von 1300 °C bis 1500 °C über Zeiträume von 2 bis 5 Stunden, in einer inerten oder reduzierenden Atmosphäre erfolgt.

8. Verfahren nach einem der Ansprüche 1 bis 7, **dadurch gekennzeichnet, dass** der Metallisierungsgrad der nach Schritt c) erhaltenen metallisierten Teilchen über 65 %, vorzugsweise über 75 %, besonders bevorzugt über 85 % des Gewichts der im Chromit-Erzmaterial und im COPR enthaltenen Fe- und Cr-Ionen, wie sie in Schritt a) eingesetzt werden, beträgt.

## Revendications

1. Procédé de préparation de particules contenant du fer et du chrome comprenant les étapes de
a) production de particules de minerai par mélange
- dans une première étape, d'un matériau de minerai de chromite, d'un résidu de traitement de minerai de chrome (COPR) et d'un composant réducteur, et
- dans une seconde étape, du mélange obtenu à l'issue de la première étape avec de l'eau,
b) séchage des particules de minerai obtenues à l'issue de l'étape a), et éventuellement
c) réduction des particules de minerai obtenues à l'issue de l'étape b) pour produire des particules métallisées,
**caractérisé en ce que** le COPR contient
• de l'oxyde de chrome(III) (Cr₂O₃) : 7 à 13 % en poids, de préférence 7,5 à 12,5 % en poids,
• de l'oxyde d'aluminium (Al₂O₃) : 10 à 30 % en poids, de préférence 18 à 24 % en poids,
• de l'oxyde de fer(II) (FeO) : 36 à 44 % en poids, de préférence 37 à 42 % en poids,
• de l'oxyde de fer(III) : (Fe₂O₃) > 0,5 % en poids, de préférence > 2 % en poids,
• de l'oxyde de magnésium (MgO) : 9 à 18 % en poids, de préférence 10 à 17 % en poids,
• de l'oxyde de calcium (CaO) : < 10 % en poids, de préférence < 5 % en poids,
• de l'oxyde de silicium (SiO₂) : 0 à 3 % en poids, de préférence 1 à 3 % en poids,
• de l'oxyde de vanadium (V₂O₅) : < 1 % en poids, de préférence < 0,5 % en poids,
• de l'oxyde de sodium (Na₂O) : 0 à 5 % en poids, de préférence 2 à 5 % en poids, et
• du chromate de sodium (Na₂CrO₄) : 0 à 4,7 % en poids, de préférence < 0,0003 % en poids,
tandis que les % en poids se rapportent au poids du COPR.

2. Procédé selon la revendication 1, **caractérisé en ce que** le matériau de minerai de chromite contient
• de l'oxyde de chrome(III) (Cr₂O₃) : 26 à 54 % en poids, en particulier de préférence de 40 à 45 % en poids,
• de l'oxyde d'aluminium (Al₂O₃) : 10 à 30 % en poids, en particulier de préférence de 13 à 18 % en poids,
• de l'oxyde de fer(II) (FeO) : 12 à 36 % en poids, en particulier de préférence de 20 à 28 % en poids,
• de l'oxyde de magnésium (MgO) : 9 à 22 % en poids, en particulier de préférence de 10 à 15 % en poids,
• de l'oxyde de calcium (CaO) : < 5 % en poids, en particulier de préférence < 1 % en poids, et
• de l'oxyde de silicium (SiO₂) : 1 à 18 % en poids, en particulier de préférence de 2 à 5 % en poids,
tandis que les % en poids se rapportent au poids du matériau de minerai de chromite.

3. Procédé selon l'une des revendications 1 à 2, **caractérisé en ce que** le composant réducteur est sélectionné dans le groupe constitué d'anthracite, de résidu charbonneux et de charbon bitumineux, de préférence d'anthracite.

4. Procédé selon l'une des revendications 1 à 3, **caractérisé en ce que** la teneur en Cr dans le COPR est de 2 à 25 % en poids, de préférence de 5 à 9 % en poids, et la teneur en Fe dans le COPR est de 28 à 35 % en poids, de préférence de 29 à 34 % en poids, tandis que les % en poids se rapportent au poids du COPR.

5. Procédé selon l'une des revendications 1 à 4, **caractérisé en ce que** la teneur en Cr(VI) du COPR est < 0,0001 % en poids.

6. Procédé selon l'une des revendications 1 à 5, **caractérisé en ce que** le mélange obtenu après le mélange du matériau de minerai de chromite, du COPR et d'un composant réducteur dans la première étape de l'étape a) comprend
• 50 à 95 % en poids, de préférence 75 à 90 % en poids de matériau de minerai de chromite,
• 1 à 15 % en poids, de préférence 2 à 5 % en poids de COPR, et
• 3 à 25 % en poids, de préférence 6 à 20 % en poids du composant réducteur,
tandis que les % en poids se rapportent au poids du mélange obtenu après le mélange du matériau de minerai de chromite, du COPR et d'un composant réducteur dans la première étape de l'étape a).

7. Procédé selon l'une des revendications 1 à 6, **caractérisé en ce que** la réduction à l'étape c) a lieu à des températures comprises entre 1250 °C et 1600 °C, pour des périodes de 1 à 8 heures, de préférence entre 1300 °C et 1500 °C pour des périodes de 2 à 5 heures, sous atmosphère inerte ou réductrice.

8. Procédé selon l'une des revendications 1 à 7, **caractérisé en ce que** le degré de métallisation des particules métallisées obtenues à l'issue de l'étape c) est supérieur à 65%, de préférence supérieur à 75%, en particulier de préférence supérieur à 85% du poids des ions Fe et Cr contenus dans le matériau de minerai de chromite et le COPR tels qu'ils sont utilisés dans l'étape a).
